Europäisches Patentamt

European Patent Office

Office européen des brevets

(19)

(11) Publication number: **0 186 381**
A2

(12) # EUROPEAN PATENT APPLICATION

(21) Application number: **85309001.7**

(22) Date of filing: **11.12.85**

(51) Int. Cl.⁴: **F 24 D 19/10**

(30) Priority: **11.12.84 CA 469847**

(43) Date of publication of application:
**02.07.86 Bulletin 86/27**

(84) Designated Contracting States:
**AT BE CH DE FR GB IT LI LU NL SE**

(71) Applicant: **Hart, Douglas Robinson Sanford**
**97, Six Point Road**
**Toronto Ontario, M8Z 2X3(CA)**

(72) Inventor: **Hart, Douglas Robinson Sanford**
**97, Six Point Road**
**Toronto Ontario, M8Z 2X3(CA)**

(74) Representative: **Walter, Douglas Ernest et al,**
**HASELTINE LAKE & CO. 28, Southampton Buildings**
**London WC2A 1AT(GB)**

(54) Diagnostic thermostat.

(57) A microprocessor type electronic thermostat samples outside temperature and furnace run time at preselected (2 second) time intervals. Data are retained and processed in the microprocessor to eliminate building thermal capacitance effects and transitory weather influences, to provide a real indication of the product of building heat loss coefficient and furnace efficiency. Data are then normalized against a baseline value to provide a universal 'energy index' which indicates real energy efficiency in the same units for all installations, regardless of building or furnace type. In this way, the diagnostic thermostat serves as an energy monitoring device that can warn when the furnace needs servicing, and also demonstrate energy savings from conservation steps taken by the building operator. A convenient energy bar graph and menu-driven LCD display provide a readily understandable display of this information for good consumer understanding.

./...

FIG 4#

TTR11                    DIAGNOSTIC THERMOSTAT

This invention relates generally to building thermostats, and has to do in particular with a thermostat capable of displaying the thermal efficiency or performance of a building and its heating system, as well as providing the usual controlling functions.

BACKGROUND AND SUMMARY OF THE INVENTION

The use of mechanical devices or data loggers which compare cumulative degree days with delivered energy is known, for example Smith, U.S. Patent 3,282,105.

The use of microprocessor-based thermostats to control heating and cooling systems is also known, for example Janes, U.S. Patent 4,388,692.

In addition, the use of centralized microprocessors to sense furnace on-time and temperatures in an apartment house is also known. For example First, U.S. Patent 4,234,927, describes a microprocessor arrangement which at preselected time. intervals, samples apartment temperatures and ON/OFF status of the thermostat calling devices. However, this patent provides no means for collecting continuous degree day information.

The systems now available in the art have several disadvantages. Because of transient effects due to building thermal capacitance and weather variables such as wind or solar access, systems comparing energy consumption with degree days are inaccurate except over long time periods (i.e. the heating season) or for exceptional steady state inaccuracy weather conditions. This introduces large (25%) errors into the value of short-term feedback mechanisms that indicate energy efficiency.

This problem seriously limits the usefulness of the short-term feedback data. Good short-term data are needed for early fault correction in the case of a malfunctioning furnace, or for positive reinforcement from energy saving measures.

Another difficulty with present systems is their degree of sophistication. Because of the technical nature of the concepts considered in these systems, such as degree days, or building heat loss coefficient, their wide marketability to the general public is limited. In addition, each building has different furnace and heating characteristics, making the data generated difficult to understand for the average consumer and impossible to compare with his next door neighbour.

A further disadvantage of current electronic thermostats is their ergonomic complexity. The number of buttons and functions make them difficult for the average consumer to learn without extensive study. Many consumers and tradespeople have expressed frustration with current thermostat designs.

Furthermore, present devices indicating building efficiency are expensive and beyond the technical and economic means of the general consumer.

The present invention, in a preferred embodiment, uses a menu-driven arrangement which greatly simplifies user ergonomics. Instead of using separate buttons for each thermostat function, the user merely selects the correct position on the menu, presses the program button, raises or lowers the value and presses the accept button. This same sequence applies to all the thermostat functions.

Another advantage of a preferred embodiment of this invention is embodied in the design of the thermostat itself. To overcome consumer resistance to a multiplicity of buttons and functions, the door and keypad have been designed to prioritize user interaction according to the level of sophistication.

With the door closed, only certain program buttons are accessible through the opening provided. These are used to override the temperature on a temporary basis. This can be done without any knowledge of further programming. The closed door also shows only the relevant parts of the LCD display needed for this simple level of consumer interaction.  This is particularly appropriate for babysitters or house occupants who need a simple means of temporary temperature control.

With the door open, the full programming capabilities of the unit are available.

Generally, the present invention provides a simple means of providing reliable short-term data indicating energy efficiency.  The transient effects due to building capacitance and weather are eliminated by selecting only significant data below a given outside temperature average.  Data are further averaged over a two-week sampling period to eliminate weather transient effects.  They are then normalized by comparison with a baseline performance value for the building stored in the microprocessor.  The normalized data are then presented in the form of a percent of 'energy index' which can be easily understood by the consumer.

A further advantage of this diagnostic thermostat/energy monitoring system is that it is low in cost and can be offered to the user at a price comparable to other thermostats now on the market.   .

The thermostat can be designed to present the information on a large menu-driven LCD display which allows easy use without user training.  Periods of high and low energy consumption can be presented as a bar graph on the display for quick reference.

In this way, the present invention in a preferred embodiment presents four major advantages over the current art:

1.   Through careful data selection, it eliminates the effects of building capacitance and weather transients which would otherwise introduce large errors into the performance data.

2.   Through the presentation of the data in the form of a normalized 'energy index' on a menu-driven display, the information is readily understood by the average consumer.

3. The present invention is much lower in cost then other systems, being about the same price as a contemporary thermostat.

4. By the design of the door, keypad and display, the preferred embodiment of the thermostat prioritizes its operations from an ergonomic point of view. This greatly simplifies the problem of user interaction.

Generally speaking, it is an aim of one aspect of this invention to provide a diagnostic thermostat which combines the monitoring capabilities described earlier with the normal function of a thermostat. Because the thermostat is already controlling the heating plant, part of the computation or sensing mechanism required is already present and supplied by the thermostat function.

GENERAL DESCRIPTION OF THIS INVENTION

More particularly, this invention provides a diagnostic thermostat for a building, comprising:

first means for sensing indoor temperature,

second means for sensing outdoor temperature,

third means for cycling a furnace on and off in response to the level of the indoor temperature,

fourth means for measuring time,

fifth means for setting a desired indoor temperature,

microprocessor means for determining, on the basis of signals from the first, second, third and fourth means, the heating performance of the building over a given period of time, and

sixth means for displaying the said heating performance.

Furthermore, this invention provides a method of diagnosing the heating performance of a building which includes a furnace, comprising the steps:

a) sensing indoor temperature and providing a first signal based thereon,

b) sensing outdoor temperature and providing a second signal based thereon,

c) cycling the furnace on and off in response to the level of the indoor temperature as compared to a desired indoor temperature,

d) measuring time, and

e) on the basis of said time measurement, said first and second signals and the on and off signals, determining electronically the heating performance of the building over a given period of time.

GENERAL DESCRIPTION OF THE DRAWINGS

One embodiment of this invention is illustrated in the accompanying drawings, in which like numerals denote like parts throughout the several views, and in which:

Figure 1 is an elevational view of a front panel of a diagnostic thermostat, showing the basic display functions;

Figure 2 illustrates an inner panel accessed by lifting or removing the front panel, the inner panel allowing the inputting of fixed data;

Figure 3 shows in schematic form the basic components of the diagnostic thermostat and the connection to both the furnace and an outside temperature sensor; and

Figure 4 is a perspective view of a preferred embodiment of the thermostat of this invention, showing a masking door as part of the design.

DETAILED DESCRIPTION OF THE DRAWINGS

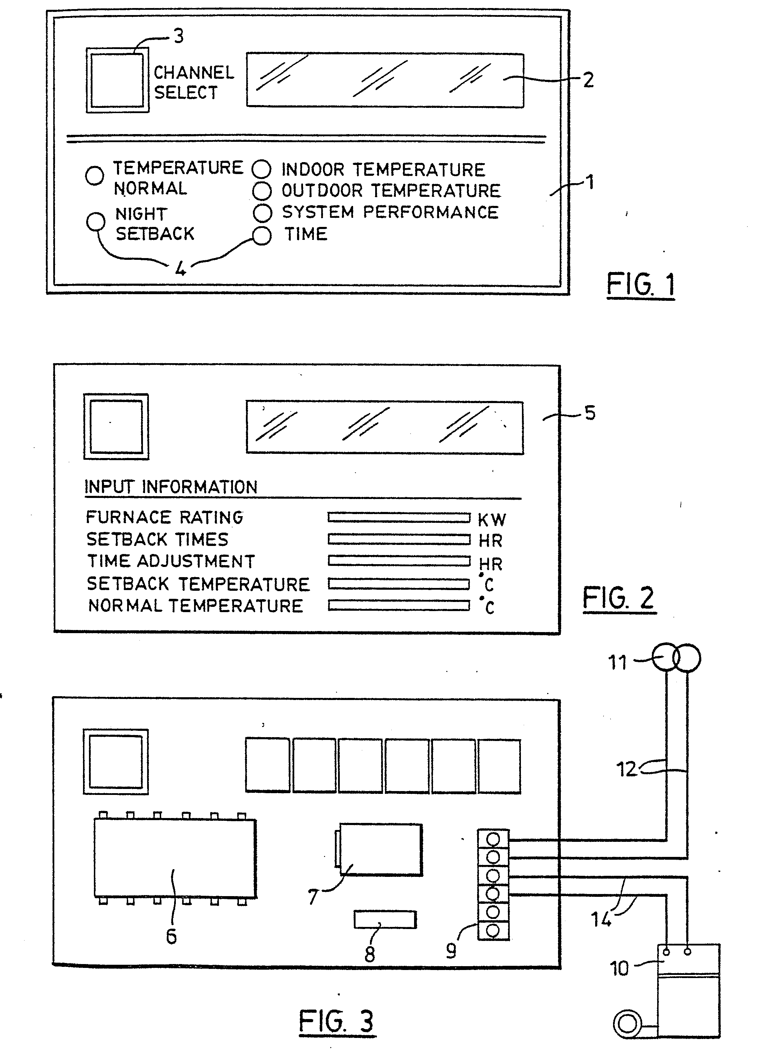

The thermostat shown in the figures, particularly in Figure 3, incorporates a microprocessor 6 which utilizes a digital display to show several pieces of information, selectable by the operator. The unit also incorporates an electronic clock 7.

In addition to sensing inside temperature directly at the thermostat itself and controlling the heating system in the normal way, the thermostat senses outside temperature by virtue of an outside temperature probe 11 and wires 12 connecting the probe 11 to the thermostat shown in Figure 3. By accumulating degree days and run time of the heating or cooling plant, the thermostat can calculate, store and display energy used per degree day for a given period of elapsed time. This information represents the performance or efficiency of the building and its heating system. Naturally, any other units may also be employed.

For example, the thermostat could express the average building performance in BTUs per degree day over the previous two week period, two months, or even a year. It could also express this information in terms of energy savings or in terms of a percent reduction from an initial standard energy consumption rate. The data would be accumulated in the memory of the microprocessor, and displayed upon command on the digital display. In Figure 3, an indoor temperature sensor 8 is illustrated, along with a wiring terminal 9. The wiring terminal 9 also allows the connection of the control wires 14 going to the furnace 10.

One important advantage of the diagnostic thermostat disclosed herein is that improvements in the building or its heating system would become immediately visible in terms of the building efficiency. For example, improved sealing of doors and windows or building insulation would show up as an immediate improvement in building efficiency, i.e. less BTUs per degree day over a given period. Similarly, a decrease in furnace efficiency, such as would occur with a clogged filter or combustion jet, would show up as a decrease in building efficiency, i.e. more BTUs per degree day.

Without a device of this kind, these effects would become visible only by comparing fuel bills over an extended time, for example for two separate years. However, such information would be clouded by variations in fuel costs and the varying severity of the winter months.

In the case of a small commercial building or church for example, a 10% decrease in boiler efficiency could go unnoticed for several years and result in many thousands of dollars wasted. The present thermostat could show this effect within weeks.

In Figure 1, the front panel 1 includes a digital display 2 that can show the indoor temperature or any of the functions indicated. The channels are selected by the user pressing the select button 3, and the particular function being displayed is indicated by the appropriate LED indicator 4.

On the inner panel 5 shown in Figure 2, the installer or homeowner can program in fixed data such as the furnace rating (in BTU/hr or KW) and the night setback information.

Several other options could also be incorporated into the thermostat disclosed herein. The system as it is would illustrate the effects of passive solar heating as an improvement in performance on sunny days. Alternatively, the thermostat could be adapted to monitor solar gain directly via a small window-mounted solar sensor. The microprocessor could easily be programmed to set back temperatures at night to a level determined by the operator.

The system could also be used for monitoring the efficiency of cooling systems, or both heating and cooling systems together.

It is also contemplated that the thermostat microprocessor could be used to compute and display other environmental information, such as humidity or air pollutants (indoor or outdoor), using the appropriate sensors. A further function could be to predict the weather by means of measuring such variables as temperatures, humidities or their rates of change, then processing this information by means of software stored in the microprocessor.

It is further contemplated that the microprocessor could be used to store indoor or outdoor temperature records over a past period, for the information of the operator. For example, it could display the maximum and minimum outdoor temperature for the past 24 hr. period. It is additionally contemplated that the energy savings could be displayed as an 'energy consumption index' which would set itself to 100% during the first month of cold weather operation, and thereafter show a number proportional to the increase or decrease in energy consumpsion. For example, if a user insulated the building and reduced his index to 83%, this means he would save approximately 17% on his fuel bills.

Note that in order to determine an accurate performance evaluation, the thermostat would be required to take average data over a period of time (for example one or two weeks), in order to eliminate short-term transient effects in the weather and building heating system.

It is contemplated to arrange the thermostat such that it would not make a computation of heating efficiency at times when the outside temperature was greater than a certain predetermined level. This will further tend to eliminate transient effects which arise when only a marginal amount of heat is required to maintain the building interior at room temperature.

It is to be understood that the energy savings could be expressed in terms of BTU, KWH or dollars saved over a period of time. This would require the input of user information such as furnace rating or fuel price via the thermostat keypad.

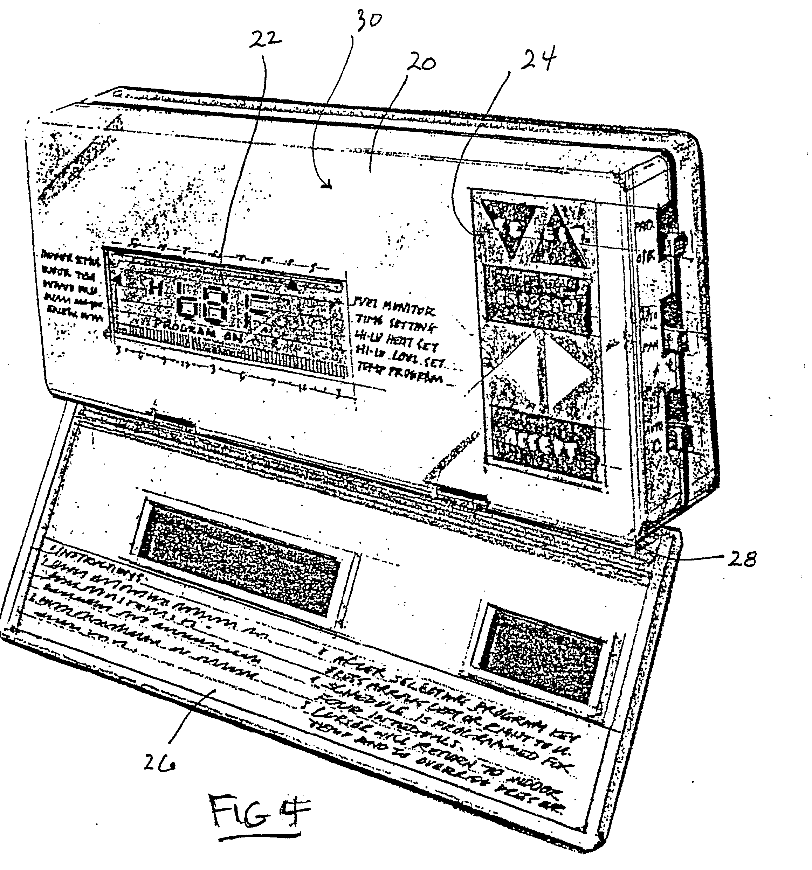

Referring to Figure 4, a preferred embodiment of the thermostat is shown at 20, having a digital display 22, and an input pad 24. A door 26 hinged at the line 28 is adapted to close over the forward face 30 of the thermostat 20, thus restricting access to a limited portion of the display 22 and a limited portion of the keypad 24. In this manner, operation of the thermostat could be restricted to a simple lowering or raising of the indoor temperature, without the user being able to access the other functions of the thermostat. This would be particularly suitable when the thermostat is to be operated by a babysitter, or other persons who are not trained in the use of all functions of the thermostat.

While one embodiment of this invention has been illustrated in the accompanying drawings and described hereinabove, it will be evident to those skilled in the art that changes and modifications may be made therein without departing from the essence of this invention, as set forth in the appended claims.

The following pages contain the program documentation, ROM and RAM usage, data and program structures, flow code, and the internal program used in a preferred embodiment of this thermostat.

1.I/O pin usage

I/O pin#    Function

| | |
|---|---|
| D0 | Keypad input - Select Up key, active low |
| D1 | Keypad input - Select down key, active low |
| D2 | Keypad input - Increment key, active low |
| D3 | Keypad input - Decrement key, active low |
| D4 | Keypad input - Accept key, active low |
| D5 | Keypad input - Program key, active low |
| D6 | Indoor temperature input, 50% duty cycle, f=1.4RC |
| D7 | Low battery input, 0-low battery, 1-battery OK |
| D8 | Outdoor temperature input, 50% duty cycle, f=1.4RC |
| D9 | F/C switch, 0-F, 1-C |
| D10 | spare |
| D11 | Low battery test output, 0- test, 1-no test |
| D12 | spare |
| D13 | spare |
| D14 | Real time clock oscillator |
| D15 | Real time clock oscillator |
| R00 | spare |
| R01 | Program off switch, 0-Program off, 1-Program on |
| R02 | spare |
| R03 | spare |
| R10 | Heat mode input, 0-Heat mode on |
| R11 | Cool mode input, 0-Cool mode on |
| R12 | Auto mode input, 0-Auto mode on |
| R13 | spare |
| R20 | Cooling anticipation 0-1 Degree F, 1-1/2 Degree F |
| R21 | Heating anticipation 0-1 Degree F, 1-1/2 Degree F |
| R22 | Dead band bit 0 |
| R23 | Dead band bit 1, 00-1 Deg F, 01 2 Deg F, 10 3 Deg E, 11 4 Deg F. |
| R30 | Cooling system control, 0-on, 1-off |
| R31 | Heating system control, 1-on, 0-off |
| R32 | spare |
| R33 | spare |

2.LCD     display memory assignment                    0186381

| Digits | File 0 | | | | File 1 | | | |
|---|---|---|---|---|---|---|---|---|
|  | b0 | b1 | b2 | b3 | b0 | b1 | b2 | b3 |
| 0 | M | B47 | B16 | B15 | nu | nu | nu | nu |
| 1 | X0 | B46 | B17 | B14 | nu | nu | nu | nu |
| 2 | X1 | B45 | B18 | B13 | 5F | 5G | 5E | 5D |
| 3 | X2 | B44 | B19 | B12 | 5A | 5B | 5C | nu |
| 4 | X3 | B43 | B20 | B11 | 4F | 4G | 4E | 4D |
| 5 | X4 | B42 | B21 | B10 | 4A | 4B | 4C | : |
| 6 | X5 | B41 | B22 | B9 | 3F | 3G | 3E | 3D |
| 7 | nu | B40 | B23 | B8 | 3A | 3B | 3C | nu |
| 8 | nu | B39 | B24 | B7 | 2F | 2G | 2E | 2D |
| 9 | – | B38 | B25 | B6 | 2A | 2B | 2C | nu |
| 10 | X10 | B37 | B26 | B5 | 1F | 1G | 1E | 1D |
| 11 | X9 | B36 | B27 | B4 | 1A | 1B | 1C | nu |
| 12 | X8 | B35 | B28 | B3 | SUN | WED | THR | nu |
| 13 | X7 | B34 | B29 | B2 | MON | TUE | FRI | SAT |
| 14 | X6 | B33 | B30 | B1 | COOL | PROG | OFF | nu |
| 15 | – | B32 | B31 | B0 | HEAT | ON | L.B. | nu |

Notes:
1. B0-B48 are the 48 bar graph segments with B0 at the left of the display.
2. nu means NOT USED
3. X0-X10 correspond to the user state indicators starting at the upper left corner of the display, moving through to the lower right corner of the display. the table below identifies which user states are associated with which Xi.

| User state# | Xi |
|---|---|
| 0 | X1 |
| 1 | X2 |
| 2 | X3 |
| 3 | X4 |
| 4 | X6 |
| 5 | X7 |
| 6 | X8 |
| 7 | X9 |
| 8 | X10 |

4. L.B. refers to the LOW BATTERY message
5. PROG. refers to the PROGRAM message
6. The day of week, and numerical data are set in RAm using the Pattern instruction. Two pattern tables are set up in Bank 1, which contain the bit patterns to be loaded into display RAM. These table are defined below:
7. The menu indicator is set by setting the least significant bit of the associated memory variable.
8. The bar code bits are set by setting the appropriate bit in each associated nibble.

Day of week ROM patterns

| Bank | Page | address | Pattern for | Hex pattern |
|------|------|---------|-------------|-------------|
| 1 | 30 | 00 | Sunday | |
| 1 | 30 | 01 | monday | |
| 1 | 30 | 02 | tuesday | |
| 1 | 30 | 03 | wednesday | |
| 1 | 30 | 04 | thursday | |
| 1 | 30 | 05 | friday | |
| 1 | 30 | 06 | saturday | |
| 1 | 30 | 07 | all | |

Numeric data ROM patterns

| Bank | Page | address | Pattern for | Hex pattern |
|------|------|---------|-------------|-------------|
| 1 | 30 | 10 | 0 | |
| 1 | 30 | 11 | 1 | |
| 1 | 30 | 12 | 2 | |
| 1 | 30 | 13 | 3 | |
| 1 | 30 | 14 | 4 | |
| 1 | 30 | 15 | 5 | |
| 1 | 30 | 16 | 6 | |
| 1 | 30 | 17 | 7 | |
| 1 | 30 | 18 | 8 | |
| 1 | 30 | 19 | 9 | |
| 1 | 30 | 1A | A | |
| 1 | 30 | 1B | P | |
| 1 | 30 | 1C | F | |
| 1 | 30 | 1D | C | |
| 1 | 30 | 1E | - | |

## 3.RAM usage

| Variable | File | Digit | Comments |
|---|---|---|---|
| HSCHD1 | 2 | 0-8 | First heating time schedule |
| HSCHD2 | 3 | 0-8 | Second heating time schedule |
| HSCHD3 | 4 | 0-8 | Third heating time schedule |
| HSCHD4 | 5 | 0-8 | Fourth heating time schedule |
| CSCHD1 | 6 | 0-8 | First cooling time schedule |
| CSCHD2 | 7 | 0-8 | Second cooling time schedule |
| CSCHD3 | 8 | 0-8 | Third cooling time schedule |
| CSCHD4 | 9 | 0-8 | Fourth cooling time schedule |
| HON | 2 | 9-14 | Daily heating system on time in minutes |
| CSEQU | 2 | 15 | Control sequence flag |
| DDB | 3 | 9-14 | Daily degree minutes |
| EINDX | 4 | 9-11 | Raw energy index |
| BINDX | 4 | 12-14 | Raw base energy index |
| BSET | 4 | 15 | Base index indicator 0- calculated 1-not yet calculated |
| CCOMF | 5 | 9-11 | Cooling comfort setting -99 to 99 |
| CSAV | 5 | 12-14 | Cooling energy saving setting -99 to 99 |
| HCOMF | 6 | 9-11 | Heating comfort setting -99 to 99 |
| HSAV | 6 | 12-14 | Heating energy saving setting -99 to 99 |
| CCONST | 7 | 9-13 | Conversion constant * 100, -99.99 to 99.99 |
| COFFSET | 8 | 9-13 | Conversion offset -999 to 999 |
| MODE | 8 | 14 | Current operating mode 0 - heating 1 - cooling |
| PMODE | 8 | 15 | Previous mode |
| RINDEX | 9 | 9-11 | Raw energy index for the current day |
| CURSET | 9 | 12-15 | Current set point in binary units  0 to 999 |
| TICKS | 10 | 0 | 1/4 second ticks |
| SECS | 10 | 1-2 | Seconds0 to 59 |
| MIN | 10 | 3-4 | Minutes 0 to 59 |
| HOURS | 10 | 5-6 | Hours 0 to 12 |
| HHOUR | 10 | 7-8 | 1/2 hours 0-47 |
| AMPM | 10 | 9 | AM, PM indictor 0-AM, 1-PM |
| DWK | 10 | 10 | Day of week, 1 TO 7 = SUN to SAT |
| PMIN | 10 | 11 | Previous minutes flag |
| SMIN | 10 | 12 | Start of new minute flag, 1-new minute 0-same minute |
| SETUPD | 10 | 13 | Setting update flag, 0-don't update settings, 1-update settings |
| TNUM | 11 | 0 | Transition number |
| PTNUM | 11 | 1 | Previous transition number |
| SCHED | 11 | 2 | Currently active schedule number |
| SETTING | 11 | 3-5 | Current control setting 0-99 |

| Variable | File | Digit | Comments |
|----------|------|-------|----------|
| PADNO | 11 | 6 | Keypad most recently pressed<br>0 - Select up key<br>1 - select down key<br>2 - increment key<br>3 - decrement key<br>4 - accept key<br>5 - program key<br>15 - no key |
| BFLAG | 11 | 7 | Blink flag, complemented every 1/4 secs |
| BDIGIT | 11 | 8 | Start digit in file 1 to blink |
| BTYPE | 11 | 9 | Blink type, 0-no blink<br>1 - two digit number to blink<br>2 - transition bar to blink |
| USTAT | 11 | 10 | User state variable |
| DSET | 11 | 11 | Value by which to increment or decrement the binary settings for a 1 degree change in engineering units |
| IDTEMP | 12 | 0-2 | Inside temp in binary |
| ODTEMP | 12 | 3-5 | Outside temp in binary |
| BDISP | 12 | 6 | Bar graph to display 0-7 for heating and cooling schedules, 8 for blank graph |
| BDIGIT | 12 | 7 | Pointer to bar graph display digit 0-15 |
| BBIT | 12 | 8 | Pointer to bar graph display bit 0-2<br>These pointers are used during bar graph entry |
| PROG | 12 | 9 | Program state flag, used to indicate the variable currently being programmed. |
| DDISP | 12 | 10 | Day of week to display, 1-7 sunday to saturday, 8 all days. |
| TUNIT | 12 | 11-12 | Temperature units pattern, when loaded to the display, displays F or C. |
| SDAY | 12 | 13 | Day fo which schedule is to be edited. |
| SDSCHED | 12 | 14 | Schedule for the selected day. |
| TTIMER | 12 | 15 | Time out timer, <3 no time out<br>=3 time out has occurred |

-15-

4.Math utilities
the program will include a library of math routines, which will operate on 5 nibble numbers and generate 5 nibble results. Numbers will be stored in BCD format with a leading sign nibble. These routines will expect arguments to be found in file 15, and will return results in the same file. The following routines will be implemented:

| Routine Name | Description |
| --- | --- |
| MULT | This multiplies two 7 nibble signed BCD numbers to generate a 7 nibble signed result. |
| DIV | This divides two signed 7 nibble BCD numbers to generate a 7 nibble signed result |
| ADD | This adds two 7 nibble signed BCD numbers to generate a 7 nibble signed result. |
| MOVN | This moves n nibbles from a specified file and digit to a specified file and digit. |
| INCM | This increments a specified variable of specified length, by a specified amount. |

Subtraction will be carried out by adding one negative and one positive number.

All control calculations will be carried out in binary units. Data to be displayed will be converted to engineering units by multiplying by a constant and adding an offset.

All engineering units entered, i.e. set points will be converted to binary units before being stored. Signed BCD notation will be used to store all numbers.

The conversion constants and offsets will be selected by examining the F/C input once a scan, and selecting the appropriate values.

## 5. Data structures

The system stores 8 operating time schedules. Four are for heating operation, four for cooling.

Each schedule includes 4 transition times and a day variable. Each schedule is defined by its start address. the transition times are stored as half hour counts, with 00:00 corresponding to a count of 0, and 23:30 corresponding to a count of 47. The schedule structure is shown below:

| Nibble# | function |
| --- | --- |
| 0 | Day variable, 0 not used, 1-7 days of week, 8 all days |
| 1-2 | First transition, from off to on |
| 3-4 | second transition, from on to off |
| 5-6 | third transition, from off to on |
| 7-8 | fourth transition, from on to off |

6.Program structure
The program cosists of a foreground program, and an interrupt program.

The foreground program consists of an endless loop which processes the operator input, and carries out the control strategy.

The interrupt program keeps time, checks for keypad activity, and reads the inside and outside temperatures.

The LCD IV processor allows only 4 levels of nesting, because of this, the interrupt routine will be run without calling any subroutines, the foreground program will be able to nest routines to 3 levels of nesting.

The program seuqence is described in the flow code below.

7.1 Initialization

```
BEGIN INITIALIZATION
     SET REGISTER R4 FOR: NO LCD EXTENSION, 1/4 DUTY RATIO
     SET REGISTER R5 FOR: 1/3 BIAS, LCD RAM IN FILES 0 AND 1
     SET REGISTER R6 FOR: NO LCD BLANKING
     SET D0-D9 OUTPUT HIGH TO ENABLE INPUT SENSING
     SET D11 HIGH TO DISABLE BATTERY TESTING
     SET R1 OUTPUT HIGH TO ENABLE INPUT SENSING
     SET R2 OUTPUT HIGH TO ENABLE INPUT SENSING
     SET R30 HIGH TO SET THE COOLING CONTROL OFF
     SET R31 LOW TO SET THE HEATING CONTROL OFF
     CLEAR ALL OF RAM
     LOAD DEFAULT TIME SCHEDULES INTO RAM
     LOAD TIMER WITH 12 FOR 4 HZ INTERRUPT FREQUENCY
     RESET CF TO ENABLE TIMER MODE OF OPERATION
     RESET TF TO ENABLE TIMER INTERRUPTS
     ENABLE INTERRUPTS
END INITIALIZATION
```

```
BEGIN MAIN PROGRAM
     REPEAT FOREVER
          IF CSEQU=0 THEN
               CARRY OUT TIME CHECK
               ESTABLISH MODE, HEATING OR COOLING
          END IF
          IF (SMIN=1 OR SETCHK=1) AND PROG=0 THEN
               CARRY OUT CONTROL
          END IF SMIN
          IF SMIN=1 THEN
               CARRY OUT MONITORING
          END IF SMIN
          INCREMENT SEQUENCE NUMBER
          PROCESS USER INPUTS
     END REPEAT FOREVER
END MAIN PROGRAM


BEGIN TIME CHECK
     IF (MIN <> PMIN) THEN
          SET SMIN TO 1
          STORE MIN IN PMIN
     ELSE
          SET SMIN TO 0
     END IF MIN
END TIME CHECK
```

```
BEGIN ESTABLISH MODE                              0186381
      IF R10 IS 0 THEN
           SET MODE = HEAT (0)
      END IF
      IF R11 IS 0 THEN
           SET MODE = COOL (1)
      END IF
      IF R12 = 0 THEN
           IF MODE = HEAT THEN
                IF CURRENT SETTING > HEATING COMFORT SETTING THEN
                     IF INDOOR TEMP > CURRENT SETTING + 2 C THEN
                          SET MODE TO COOL
                     END IF INDOOR
                ELSE
                     IF INDOOR TEMP > H COMFORT SETTING + 2C THEN
                          SET MODE TO COOL
                     END IF INDOOR
                END IF CURRENT SETTING
           END IF MODE
           IF MODE = COOL THEN
                IF CURRENT SETTING < COOLING COMFORT SETTING THEN
                     IF INDOOR TEMP < CURRENT SETTING - 2C THEN
                          SET MODE TO HEAT
                     END IF INDOOR
                ELSE
                     IF INDOOR TEMP < C SETTING - 2C THEN
                          SET MODE TO HEAT
                     END IF INDOOR
                END IF CURRENT SETTING
           END IF MODE
      END IF R12 = 0
      IF MODE = HEAT THEN
           DISPLAY HEAT MESSAGE
      ELSE
           DISPLAY COOL MESSAGE
      END IF MODE
      IF PMODE <> MODE THEN
           SET SETCHCK=1
           SET PMODE=SMODE
      ELSE
           SET SETCHK=0
      END IF
END ESTABLISH MODE
```

```
BEGIN CARRY OUT CONTROL
     IF CONTROL SEQUENCE = 0
          TURN LOW BATTERY TEST CIRCUIT ON (D11=0)
          IF R01 =1 (PROGRAM MODE ON)
               UPDATE CONTROL SETTING
               DISPLAY PROGRAM ON MESSAGE
          ELSE
               DISPLAY PROGRAM OFF MESSAGE
          END IF
          END IF R01
          ON CASE HEATING OR COOLING DO
          BEGIN HEATING
               CARRY OUT HEATING ALGORITHM
          END HEATING
          BEGIN COOLING
               CARRY OUT COOLING ALGORITHM
          END COOLING
          IF LOW BATTERY INPUT IS LOW (D7=0) THEN
               DISPLAY LOW BATTERY MESSAGE
          END IF LOW
     END IF SEQUENCE = 0
END CARRY OUT CONTROL


BEGIN CARRY OUT MONITORING
     IF CONTROL SEQUENCE = 1 THEN
          IF OUTSIDE TEMP < 18C THEN
               UPDATE DAILY DEGREE MINUTES
               UPDATE FURNACE RUN TIME
          END IF
     END IF SEQUENCE = 1
     IF CONTROL SEQUENCE = 2
          UPDATE ENERGY INDEX
     END IF SEQUENCE = 2
     IF CONTROL SEQUENCE = 3
          UPDATE BASE ENERGY INDEX
     END IF SEQUENCE = 3
END CARRY OUT MONITORING
```

```
BEGIN SETTING UPDATE
     IF SMIN=1 OR SETCHK=1 THEN
          IF MIN=30 OR MIN=0 OR SETCHK=1 THEN
               UPDATE THE CONTROL SETTING
          END IF
     END IF
END SETTING UPDATE
```

```
BEGIN UPDATING THE CONTROL SETTING
     IF MODE=0 THEN
          SELECT HEATING SCHEDULES
     ELSE
          SELECT COOLING SCHEDULES
     END IF
     FOR THE FIRST 3 SCHEDULES
          IF SCHEDULE DAY = DWK THEN
               SELECT THIS SCHEDULE
               LOAD SCHEDULE FILE# INTO SCHED
          END IF
     END FOR
     IF NO SCHEDULE HAS BEEN SELECTED THEN
          USE SCHEDULE NUMBER 4 (THE EVERY DAY SCHEDULE)
          LOAD SCHEDULE FILE NUMBER INTO SCHED
     END IF
     FOR ALL FOUR TRANSITION TIMES
          IF HHOUR > TRANSITION TIME THEN
               STORE TRANSITION NUMBER TO TNUMB
          END IF
     END FOR
     IF CURRENT TRANSITION NUMBER <> PREVIOUS TRANSITION NUMBER
     (TNUMB <> PTNUMB ) THEN
          PTNUMB=TNUMB
          IF MODE = HEATING THEN
               SELECT HEATING SETTINGS
          ELSE
               SELECT COOLING SETTINGS
          END IF
          IF TNUMB IS EVEN THEN
               LOAD ENERGY SAVING SETTING INTO SETTING
          ELSE
               LOAD COMFORT SETTING INTO SETTING
          END IF
     END IF TRANSITION NUMBER
END UPDATING CONTROL SETTING


BEGIN UPDATE DAILY DEGREE MINUTES
     CALCULATE OUTDOOR TEMP - 18C USING ADD ROUTINE
     DDB RESULT TO DDB USING ADD ROUTINE
END UPDATE DAILY DEGREE MINUTES


BEGIN UPDATE FURNACE RUN TIME
     IF R31 = 1 THEN
          INCREMENT HON BY 1 USING ROUTINE INCM
     END IF
END UPDATE DAILY DEGREE MINUTES
```

```
BEGIN UPDATE ENERGY INDEX
    IF BSET = 1 THEN
        IF HOURS = 23 AND MIN = 59 THEN
            CALCULATE RESULT1 = HON * 100 / ( 4 MSD OF DDB)
            CALCULATE RESULT2 = 13 * RINDEX
            CALCULATE RESULT3 = RESULT1 + RESULT 2
            CALCULATE REINDEX = RESULT3 / 14
            CALCULATE EINDEX = RINDEX * 100 / BINDEX
            CLEAR DDB
            CLEAR HON
        END IF HOURS
    END IF BSET
END UPDATE ENERGY INDEX


BEGIN CALCULATE BASE ENERGY INDEX
    IF BSET = 0 THEN
        IF HOURS = 23 AND MIN = 59 THEN
            IF   MSD OF DDB = 9 OR HON > 9000 THEN
                CALCULATE BINDEX = HON * 100 / ( 4 MSD OF DDB)
                SET BSET
                CLEAR DDB
                CLEAR HON
            END IF MSD
        END IF HOURS
    END IF BSET
END CALCULATE BASE ENERGY INDEX

BEGIN INCREMENT SEQUENCE NUMBER
    INCREMENT CSEQU
    IF CSEQU > 3 THEN
        SET CSEQU=0
    END IF
END INCREMENT SEQUENCE
```

```
BEGIN PROCESS USER INPUT
      SET UP TEMPERATURE UNIT VARIABLES
      DISPLAY BAR GRAPH AS INDICATED BY BDISP
      DISPLAY DAY STORED IN DDISP
      IF TTIMER = 3 THEN
          BTYPE = 0
          USTAT = 0
      END IF
      ON CASE STATE = USTAT
          PROCESS STATE
                (DISPLAY STATE  DATA)
                (DISPLAY STATE  INDICATOR)
                (PROCESS STATE  KEYPADS)
      END CASE
CARRY OUT BLINK PROCESSING
END PROCESS USER INPUT


BEGIN SET UP TEMPERATURE UNIT VARIABLES
      IF D9=0 (DEGREE F SELECTED) THEN
          SET DSET FOR DEGREES F
          SET CCONST FOR DEGREES F
          SET COFFSET FOR DEGREES F
          SET TUNIT TO F PATTERN
      ELSE
          SET DSET FOR DEGREES C
          SET CCONST FOR DEGREES C
          SET COFFFSET FOR DEGREES C
          SET TUNIT TO C PATTERN
      END IF
END SET UP TEMPERATURE VARIABLES
```

-26-

```
BEGIN DISPLAY BAR GRAPH                          0186381
     SELECT BAR GRAPH WITH FILE STORED IN BDISP
     IF BDISP < 8 THEN
          SET TNUM=0
          SET PTRAN=FIRST TRANSITION TIME
          SET LTRAN=0
          FOR 4 TRANSITION TIMES
               WHILE LTRAN < PTRAN
                    IF LTRAN IS <16 THEN
                         IF TNUM IS EVEN THEN
                              RESET BIT 0 OF DIGIT LTRAN
                         ELSE
                              SET BIT 0 OF DIGIT LTRAN
                         END IF
                         INCREMENT LTRAN
                    END IF < 16
                    IF LTRAN IS >15 AND < 32 THEN
                         IF TNUM IS EVEN THEN
                              RESET BIT 1 OF DIGIT =
                              15 - (LSN OF LTRAN)
                         ELSE
                              SET BIT 1 OF DIGIT =
                              15 - (LSN OF LTRAN)
                         END IF
                         INCREMENT LTRAN
                    END IF
                    IF LTRAN IS > 31 THEN
                         IF TNUM IS EVEN THEN
                              RESET BIT 2 OF DIGIT =
                              ( LSN OF LTRAN.)
                         ELSE
                              SET BIT 2 OF DIGIT =
                              (LSN OF LTRAN)
                         END IF
                         INCREMENT LTRAN
                    END IF
               END WHILE LTRAN
               INCREMENT TNUM
               STORE THE NEXT TRANSITION IN  PTRAN
          END FOR 4 TRANSITION TIMES
     ELSE (BDISP >=8)
          FOR FILE 0, DIGITS 0-15
               RESET BITS 0, 1, 2
          END FOR
     END IF BDISP<8
END DISPLAY BAR GRAPH

BEGIN DISPLAY DAY STORED IN DDISP
     USE DDISP AS AN INDEX TO RETRIEVE THE APPROPRIATE PATTERNS
     STORE THE PATTERNS IN FILE 1, DIGITS 12 AND 13
END DISPLAY DAY
```

```
BEGIN STATE 0 PROCESSING (SETTING)                    0186381
     SELECT SETTING
     CONVERT SELECTED DATA TO ENGINEERING UNITS
     TRANSFER DATA TO 3RD AND 2ND LSDS OF NUMERIC DISPLAY
     TRANSFER TUNIT TO LSD OF NUMERIC DISPLAY
     BLANK LEADING 3 DIGITS OF NUMERIC DISPLAY
     BLANK ":"
     ACTIVATE STATE 0 INDICATOR
     STORE SCHED IN BDISP
     STORE DWK IN DDISP
     IF INC KEY IS PRESSED THEN
          INCREMENT SETTING BY DSET
          IF SETTING > SETMAX THEN
               SETTING = SETMAX
          END IF
     END IF
     IF DEC KEY IS PRESSED THEN
          DECREMENT SETTING BY DSET
          IF SETTING < SETMIN THEN
               SETTING = SETMIN
          END IF
     END IF DEC
     IF SELECT DOWN KEY IS PRESSED THEN
          BLANK STATE 0 INDICATOR
          IF PROGRAM MODE IS ON (R01=1) THEN
               SET USTAT=8
          ELSE
               USTAT=5
          END IF
     END IF
     IF SELECT UP KEY IS PRESSED THEN
          BLANK STATE 0 INDICATOR
          SET USTAT=1
     END IF
 END CASE USTAT=0
END STATE 0 PROCESSING
```

```
BEGIN STATE 1 PROCESSING (INDOOR TEMP)                    0186381
     SELECT INDOOR TEMP
     CONVERT SELECTED DATA TO ENGINEERING UNITS
     TRANSFER DATA TO 3RD AND 2ND LSDS OF NUMERIC DISPLAY
     BLANK LEADING 2 DIGITS OF NUMERIC DISPLAY
     TRANSFER TUNIT TO LSD OF NUMERIC DISPLAY
     ACTIVATE STATE 1 INDICATOR
     IF SELECT UP KEY IS PRESSED THEN
          BLANK STATE 1 INDICATOR
          USTAT=2
     END IF SELECT UP
     IF SELECT DOWN KEY IS PRESSED THEN
          BLANK STATE 1 INDICATOR
          USTAT=1
     END IF SELECT DOWN
END STATE 1 PROCESSING


BEGIN STATE 2 PROCESSING (OUTDOOR TEMP)
     SELECT OUTDOOR TEMP
     CONVERT SELECTED DATA TO ENGINEERING UNITS
     TRANSFER DATA TO 3RD AND 2ND LSDS OF NUMERIC DISPLAY
     BLANK LEADING 2 DIGITS OF NUMERIC DISPLAY
     TRANSFER TUNIT TO LSD OF NUMERIC DISPLAY
     ACTIVATE STATE 2 INDICATOR
     IF SELECT UP KEY IS PRESSED THEN
          BLANK STATE 2 INDICATOR
          USTAT=3
     END IF SELECT UP
     IF SELECT DOWN KEY IS PRESSED THEN
          BLANK STATE 2 INDICATOR
          USTAT=2
     END IF SELECT DOWN
END STATE 2 PROCESSING


BEGIN STATE 3 PROCESSING (ENERGY INDEX)
     SELECT ENERGY INDEX
     TRANSFER SELECTED DATA TO 3 LSDS OF NUMERIC DISPLAY
     BLANK LEADING 2 DIGITS OF NUMERIC DISPLAY
     ACTIVATE STATE 3 INDICATOR
     IF SELECT UP KEY IS PRESSED THEN
          BLANK STATE 3 INDICATOR
          USTAT=4
     END IF SELECT UP
     IF SELECT DOWN KEY IS PRESSED THEN
          BLANK STATE 3 INDICATOR
          USTAT=2
     END IF SELECT DOWN
END STATE 3 PROCESSING
```

```
BEGIN STATE 4 PROCESSING (TIME)
    SELECT HOURS
    TRANSFER SELECTED DATA TO MSDS OF NUMERIC DISPLAY
    SELECT MINUTES
    TRANSFER SELECTED DATA TO NEXT 2SDS OF NUMERIC DISPLAY
    IF AMPM=0 THEN
        TRANSFER "A" TO THE LSD OF THE NUMERIC DISPLAY
    ELSE
        TRANSFER "P" TO THE LSD OF THE NUMERIC DISPLAY
    END IF
    ACTIVATE STATE 4 INDICATOR
    TURN ":" ON
    IF PROG =0 (NO PROGRAMMING) THEN
        IF SELECT UP KEY IS PRESSED THEN
            BLANK STATE 4 INDICATOR
            TURN ":" OFF
            STORE 0 TO BDISP
            USTAT=5
        END IF SELECT UP
        IF SELECT DOWN KEY IS PRESSED THEN
            BLANK STATE 4 INDICATOR
            TURN ":" OFF
            USTAT=3
        END IF SELECT DOWN
        IF PROGRAM KEY IS PRESSED THEN
            SET BDIGIT TO MSD OF NUMERIC DISPLAY
            SET BTYPE TO 1
            SET PROG TO 1
        END IF PROGRAM KEY
    IF PROG=1 THEN
        IF INCREMENT KEY IS PRESSED THEN
            INCREMENT HOURS
            IF HOURS > 11 THEN
                SET HOURS=0
                COMPLEMENT AMPM
            END IF
        END IF INCREMENT
        IF DECREMENT KEY IS PRESSED THEN
            DECREMENT HOURS
            IF HOURS <0 THEN
                HOURS=0
            END IF
        END DECREMENT KEY
        IF ACCEPT KEY IS PRESSED THEN
            SET BDIGIT TO 3RD LSD OF NUMERIC DISPLAY
            SET PROG TO 2
        END IF ACCEPT
    END IF PROG=1
```

```
IF PROG=2 THEN
        IF INCREMENT KEY IS PRESSED THEN
            INCREMENT MINUTES
            IF MINUTES > 59 THEN
                SET MINUTES = 59
            END IF
        END INCREMENT MINUTES
        IF DECREMENT KEY IS PRESSED THEN
            DECREMENT MINUTES
            IF MINUTES < 0 THEN
                SET MINUTES =0
            END IF
        END IF DECREMENT
        IF ACCEPT KEY IS PRESSED THEN
            SET PROG TO 0
            SET BTYPE TO 0
        END IF ACCEPT
    END IF PROG=2
END STATE 4 PROCESSING TIME
```

```
BEGIN STATE 5 PROCESSING (DAY OF WEEK)
      TRANSFER 0 TO ALL DIGITS OF THE NUMERIC DISPLAY
      ACTIVATE STATE 5 INDICATOR
      STORE DWK TO DDISP
      IF PROG = 0
            IF SELECT UP KEY IS PRESSED THEN
                  BLANK STATE 5 INDICATOR
                  STORE SCHED TO BDISP
                  IF PROGRAM MODE IS ON THEN
                        USTATE = 6
                  ELSE
                        USTATE = 0
                  END IF PROGRAM MODE
            END IF
            IF SELECT DOWN KEY IS PRESSED THEN
                  BLANK STATE 5 INDICATOR
                  STORE SCHED TO BDISP
                  USTATE = 5
            END IF SELECT DOWN
            IF PROG KEY IS PRESSED THEN
                  SET BTYPE TO 3
                  SET PROG TO 1
            END IF PROG
      END IF PROG=0
      IF PROG=1 THEN
            IF INCREMENT KEY IS PRESSED THEN
                  INCREMENT DYW
                  IF DYW > 7 THEN
                        DYW = 1
                  END IF DYW
            END IF INCREMENT KEY
            IF DECREMENT KEY IS PRESSED THEN
                  DECREMENT DYW
                  IF DYW < 1 THEN
                        DYW = 1
                  END IF
            END DECREMENT
            IF ACCEPT KEY IS PRESSED THEN
                  SET PROG = 0
                  SET BTYPE = 0
            END IF ACCEPT
      END IF PROG = 1
END STATE 5 PROCESSING
```

```
BEGIN STATE 6 PROCESSING (HEATING TEMP SETTINGS)
     SELECT HCOMF
     TRANSFER SELECTED DATA TO MSDS OF NUMERIC DISPLAY
     SELECT HSAV
     TRANSFER SELECTED DATA TO NEXT 2SDS OF NUMERIC DISPLAY
     TRANSFER TUNIT TO LSD OF DISPLAY
     ACTIVATE STATE 6 INDICATOR
     TURN ":" ON
     IF PROG =0 (NO PROGRAMMING) THEN
          IF SELECT UP KEY IS PRESSED THEN
               BLANK STATE 6 INDICATOR
               USTAT=7
          END IF SELECT UP
          IF SELECT DOWN KEY IS PRESSED THEN
               BLANK STATE 6 INDICATOR
               TURN ":" OFF
               STORE 0 TO BDISP
               USTAT=6
          END IF SELECT DOWN
          IF PROGRAM KEY IS PRESSED THEN
               SET BDIGIT TO MSD OF NUMERIC DISPLAY
               SET BTYPE TO 1
               SET PROG TO 1
          END IF PROGRAM KEY
     IF PROG=1 THEN
          IF INCREMENT KEY IS PRESSED THEN
               INCREMENT HCOMF
               IF HCOMF > 40C THEN
                    HCOMF = 40C
               END IF
          END IF INCREMENT
          IF DECREMENT KEY IS PRESSED THEN
               DECREMENT HCOMF
               IF HCOMF < HSAV THEN
                    HCOMF = HSAV
               END IF
          END DECREMENT KEY
          IF ACCEPT KEY IS PRESSED THEN
               SET BDIGIT TO 3RD LSD OF NUMERIC DISPLAY
               SET PROG TO 2
          END IF ACCEPT
     END IF PROG=1
```

```
IF PROG=2 THEN
     IF INCREMENT KEY IS PRESSED THEN
          INCREMENT HSAV
          IF HSAV > HCOMF THEN
               SET HSAV=HCOMF
          END IF
     END INCREMENT MINUTES
     IF DECREMENT KEY IS PRESSED THEN
          DECREMENT MINUTES
          IF HSAV < 10C THEN
               HSAV=10C
          END IF
     END IF DECREMENT
     IF ACCEPT KEY IS PRESSED THEN
          SET PROG TO 0
          SET BTYPE TO 0
     END IF ACCEPT
END IF PROG=2
END STATE 6 PROCESSING
```

```
BEGIN STATE 7 PROCESSING (COOLING TEMP SETTINGS)
     SELECT CCOMF
     TRANSFER SELECTED DATA TO MSDS OF NUMERIC DISPLAY
     SELECT CSAV
     TRANSFER SELECTED DATA TO NEXT 2SDS OF NUMERIC DISPLAY
     TRANSFER TUNIT TO LSD OF DISPLAY
     ACTIVATE STATE 7 INDICATOR
     IF PROG =0 (NO PROGRAMMING) THEN
          IF SELECT UP KEY IS PRESSED THEN
               BLANK STATE 7 INDICATOR
               USTAT=8
               STORE SDAY TO DDISP
               STORE SDSCHED TO BDISP
          END IF SELECT UP
          IF SELECT DOWN KEY IS PRESSED THEN
               BLANK STATE 8 INDICATOR
               USTAT=7
          END IF SELECT DOWN
          IF PROGRAM KEY IS PRESSED THEN
               SET BDIGIT TO MSD OF NUMERIC DISPLAY
               SET BTYPE TO 1
               SET PROG TO 1
          END IF PROGRAM KEY
     IF PROG=1 THEN
          IF INCREMENT KEY IS PRESSED THEN
               INCREMENT CCOMF
               IF CCOMF > CSAV THEN
                    CCOMF = CSAV
               END IF
          END IF INCREMENT
          IF DECREMENT KEY IS PRESSED THEN
               DECREMENT CCOMF
               IF CCOMF < 10 THEN
                    CCOMF = 10
               END IF
          END DECREMENT KEY
          IF ACCEPT KEY IS PRESSED THEN
               SET BDIGIT TO 3RD LSD OF NUMERIC DISPLAY
               SET PROG TO 2
          END IF ACCEPT
     END IF PROG=1
```

```
IF PROG=2 THEN
     IF INCREMENT KEY IS PRESSED THEN
          INCREMENT CSAV
          IF CSAV > 40 THEN
               SET CSAV=40
          END IF
     END INCREMENT MINUTES
     IF DECREMENT KEY IS PRESSED THEN
          DECREMENT MINUTES
          IF CSAV < CCOMF THEN
               HSAV=CCOMF
          END IF
     END IF DECREMENT
     IF ACCEPT KEY IS PRESSED THEN
          SET PROG TO 0
          SET BTYPE TO 0
     END IF ACCEPT
   END IF PROG=2
END STATE 7 PROCESSING
```

```
BEGIN STATE 8 PROCESSING (BAR GRAPH PROCESSING)
     IF MODE = 0 (HEATING) THEN
          LOAD HCOMF TO MSDS OF NUMERIC DISPLAY
          LOAD HSAV TO 3RD AND 2ND LSDS OF NUMERIC DISPLAY
     ELSE
          LOAD CCOMF TO MSDS OF NUMERIC DISPLAY
          LOAD CSAV TO 3RD AND 2ND LSDS OF NUMERIC DISPLAY
     TURN ":" ON
     UPDATE SDSCHED FOR SDAY
     STORE SDSCHED IN  BDISP
     TRANSFER TUNITS TO LSD OF NUMERIC DISPLAY
     ACTIVATE STATE 8 INDICATOR
     IF PROG = 0 THEN
          IF SELECT UP KEY IS PRESSED THEN
               BLANK STATE 8 INDICATOR
               SET USTAT=0
               STORE SCHED TO BDISP
               STORE DWK TO DDISP
          END IF SELECT UP
          IF SELECT DOWN KEY IS PRESSED THEN
               BLANK STATE 8 INDICATOR
               SET USTAT=7
               STORE SCHED TO BDISP
               STORE DWK TO DDISP
          END IF SELECT DOWN
          IF INCREMENT KEY IS PRESSED THEN
               INCREMENT SDAY
               IF SDAY>8 THEN
                    SET SDAY =1
               END IF
          END IF INCREMENT KEY
          IF DECREMENT KEY IS PRESSED THEN
               DECREMENT SDAY
               IF SDAY < 0 THEN
                    SET SDAY=8
               END IF SDAY
          END IF DECREMENT
          IF PROGRAM KEY IS PRESSED THEN
               SET BTYPE TO 2
               SET PROG TO 1
          END IF PROGRAM KEY IS PRESSED
     END IF PROG = 0
```

```
        IF PROG > 0 THEN                                      0186381
            SET BBIT TO MSD OF TIME TRANS(PROG) * 2
            IF BBIT = 0 OR 4 THEN
                SET BDIGIT TO LSD OF TIME TRANS(PROG)
            ELSE
                SET BDIGIT TO 15-LSD OF TIME TRANS(PROG)
            END IF BBIT
            IF INCREMENT KEY IS PRESSED THEN
                INCREMENT TIME TRANSITION (PROG)
                IF TIME TRANSITION (PROG) > 47 THEN
                    TIME TRANSITION (PROG) = 47
                END IF
            END IF INCREMENT KEY
            IF THE DECREMENT KEY IS PRESSED THEN
                DECREMENT TIME TRANSITION (PROG)
                IF TIME TRANSITION (PROG) < 0 THEN
                    TIME TRANSITION (PROG) = 0
                END IF
            END IF DECREMENT KEY
            IF INCREMENT OR DECREMENT KEY IS PRESSED THEN
                FOR ALL TIME TRANSITIONS (I) WHERE   1=<I<=3
                    IF I < PROG THEN
                        IF TIME TRANS (I) > TIME TRANS (PROG) THEN
                            TIME TRANS (I) = TIME TRANS (PROG)
                        END IF TIME TRANS
                    END IF I < PROG
                    IF I > PROG THEN
                        IF TIME TRANS(I) < TIME TRANS(PROG) THEN
                            TIME TRANS(I) = TIME TRANS(PROG)
                        END IF TIME TRANS
                    END IF I >
                END FOR ALL
            END IF INCREMENT OR DECREMENT
            IF ACCEPT KEY IS PRESSED THEN
                PROG = PROG + 1
                IF PROG > 4 THEN
                    PROG = 0
                    BTYPE = 0
                END IF
            END IF ACCEPT
        END IF PROG > 0
END STATE 8 PROCESSING
```

```
BEGIN CONVERT SELECTED DATA TO ENGINEERING UNITS
      MULTIPLY SELECTED DATA BY CCONST
      DIVIDE RESULT BY 100 (DROP 2 LEAST SIGNIFICANT DIGITS)
      ADD COFFSET
END CONVERT SELECTED DATA


BEGIN CARRY OUT BLINK PROCESSING
      IF BFLAG=1 THEN
            IF BTYPE=1 THEN
                  STORE 0 INTO BDIGIT AND BDIGIT+1 OF FILE 1
            END IF BTYPE=1
            IF BTYPE=2 THEN
                  SET BIT BBIT OF DIGIT BDIGIT IN FILE 0 TO 0
            END IF BTYPE=2
            IF BTYPE=3 THEN
                  STORE 0 INTO FILE 0 DIGITS 12 AND 13
            END IF BTYPE=3
END CARRY OUT BLINK PROCESSING
```

```
BEGIN INTERRUPT PROGRAM
     READ KEYPAD
     INCREMENT THE TIME
     BLINK THE DISPLAY
END INTERRUPT ROUTINE


BEGIN READ THE KEYPAD
     FOR ALL INPUTS D0-D5
          IF THE INPUT = 0 THEN
               STORE PAD NUMBER IN PADNO
          END IF
     CLEAR TTIMER
     END FOR ALL
END READ KEYPAD


BEGIN INCREMENT THE TIME
     INCREMENT TICKS
     IF TICKS = 1 AND SECS = 58 THEN
          TURN TEMPERATURE TIMER ON
     END IF
     IF TICKS = 2 AND SECS = 58 THEN
          READ INSIDE TEMP
     END IF
     IF TICKS = 3 AND SECS = 58 THEN
          READ  OUTSIDE TMEP
     END IF
     IF TICKS = 4 THEN
          SET TICKS =0
          INCREMENT SECS
          IF SECS = 60 THEN
               SET SECS = 0
               INCREMENT MINUTES
               INCREMENT TTIMER
               IF TTIMER >3 THEN
                    TTIMER = 3
               END IF TTIMER
               IF MINUTES = 30 THEN
                    INCREMENT HHOUR
               END IF
               IF MINUTES = 60 THEN
                    SET MINUTES = 0
                    INCREMENT HHOUR
                    IF HHOUR > 47 THEN
                         SET HHOUR = 0
                    END IF
                    INCREMENT HOUR
                    IF HOUR = 24 THEN
                         HOUR = 0
                         INCREMENT DWK
                         IF DWK = 8 THEN
                              DWK = 1
```

```
                    END IF DWK
                  END IF HOUR
                END IF MINUTE
              END IF SECS
          END IF TICKS
END INCREMENT THE TIME


BEGIN PROCESSING THE BLINK FLAG
      COMPLEMENT BFLAG
END PROCESSING THE BLINK FLAG


BEGIN READ INSIDE TEMP
      PTEMP = TEMP INPUT
      WHILE PTEMP = TEMP INPUT
            READ TEMP INPUT
      END WHILE
      PTEMP = TEMP INPUT
      WHILE PTEMP = TEMP INPUT
            READ TEMP INPUT
            INCREMENT IDTEMP
      END WHILE
END READ INSIDE TEMP


BEGIN READ OUTSIDE TEMP
      PTEMP = TEMP INPUT
      WHILE PTEMP = TEMP INPUT
            READ TEMP INPUT
      END WHILE
      PTEMP = TEMP INPUT
      WHILE PTEMP = TEMP INPUT
            READ TEMP INPUT
            INCREMENT ODTEMP
      END WHILE
END READ OUTSIDE TEMP
```

THE EMBODIMENTS OF THE INVENTION IN WHICH AN EXCLUSIVE
PROPERTY OR PRIVILEGE IS CLAIMED ARE DEFINED AS
FOLLOWS:

1.    A diagnostic thermostat for a building,
comprising:

first means for sensing indoor temperature,

second means for sensing outdoor temperature,

third means for cycling a furnace on and off in
response to the level of the indoor temperature,

fourth means for measuring time,

fifth means for setting a desired indoor
temperature,

microprocessor means for determining, on the basis
of signals from the first, second, third and fourth
means, the heating performance of the building over a
given period of time, and

sixth means for displaying the said heating
performance.

2.    The invention claimed in claim 1, in which the
heating performance is expressed as BTUs per degree
day.

3.    The invention claimed in claim 1, which further
comprises seventh means for setting back the desired
indoor temperature over a portion of each day.

4.    The invention claimed in claim 3, which further
comprises eighth means for electronically inputting the
furnace rating, the setback time and duration and the
setback temperature, the fifth means for setting a
desired indoor temperature being part of the eighth
means and being done electronically.

5.    The invention claimed in claim 1, in which said
microprocessor means makes its determinations only when
the outdoor temperature is below a predetermined level.

6.    The invention claimed in claim 1, in which said
given period of time is at least two weeks.

7.    The invention claimed in claim 6, in which said
given period of time is at least two weeks.

8.    The invention claimed in claim 1, further
comprising an apertured door which masks certain parts
of the display and certain controlling inputs when closed, thus simplifying use of the thermostat by untrained persons.

9. A method of diagnosing the heating performance of a building which includes a furnace, comprising the steps:

a) sensing indoor temperature and providing a first signal based thereon,

b) sensing outdoor temperature and providing a second signal based thereon,

c) cycling the furnace on and off in response to the level of the indoor temperature as compared to a desired indoor temperature,

d) measuring time, and

e) on the basis of said time measurement, said first and second signals and the on and off signals, determining electronically the heating performance of the building over a given period of time.

10. The method claimed in claim 9, in which the heating performance is expressed as BTUs per degree day.

11. The method claimed in claim 9, which comprises the further step of setting back the desired indoor temperature over a portion of each day.

12. The method claimed in claim 9, in which step e) is carried out only when the outdoor temperature is below a predetermined level.

13. The method claimed in claim 9, in which said given period of time is at least two weeks.

14. The method claimed in claim 13, in which step e) is carried out only when the outdoor temperature is below a predetermined level.

0186381

CHANNEL
SELECT

3

2

1

○ TEMPERATURE
NORMAL

○ NIGHT
SETBACK

○ INDOOR TEMPERATURE
○ OUTDOOR TEMPERATURE
○ SYSTEM PERFORMANCE
○ TIME

4

FIG. 1

5

INPUT INFORMATION

FURNACE RATING ........................ KW
SETBACK TIMES ........................ HR
TIME ADJUSTMENT ........................ HR
SETBACK TEMPERATURE ........................ °C
NORMAL TEMPERATURE ........................ °C

FIG. 2

11

12

6

7

8

9

14

10

FIG. 3

0186381

FIG 4